# EUROPEAN PATENT SPECIFICATION

(11) **EP 3 582 546 B1**
(45) Date of publication and mention of the grant of the patent: **06.10.2021**
(21) Application number: 17899698.9
(22) Date of filing: 06.03.2017
(51) Int. Cl.: H04W 36/00, H04W 36/14, H04W 36/30

(54) **HANDOVER CONTROL METHOD**
ÜBERGABESTEUERUNGSVERFAHREN
PROCÉDÉ DE COMMANDE DE TRANSFERT

(43) Date of publication of application: 18.12.2019
(73) Proprietor: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan Guangdong 523860 (CN)
(74) Representative: Manitz Finsterwald Patent- und Rechtsanwaltspartnerschaft mbB
(86) International application number: PCT/CN2017/075795
(87) International publication number: WO 2018/161225

(56) References cited:
- EP-A1- 2 445 264
- EP-A1- 2 760 230
- CN-A- 104 717 709
- US-A1- 2013 230 024
- US-A1- 2014 126 545
- US-A1- 2016 037 417

## Description

### Technical Field

The present disclosure relates to the technical field of communication, in particular to a handover control method, a network-side device, and a system.

### Background

The 4th Generation (4G) mobile communication network, such as a Long Term Evolution (LTE) network, has now achieved wide coverage. However, with emergence of requirements for networks such as the Internet of Things and the Internet of Vehicles, users are demanding more and more for a next generation mobile communication network, that is, the 5th Generation (5G) mobile communication network. Handover is an essential and important function in a mobile communication system. Because a coverage area of a base station is limited, with movement of a terminal, in order to maintain continuous communication, wireless connection between the terminal and a network must be transferred from one network (cell) to another network (cell), which is handover.

In order to reduce latency of handover, a 5G communication system introduces a terminal-based network handover technology. Specifically, the technology includes following acts: a terminal is currently attached to a first service network, a first network-side device of the first service network configures a measurement configuration and a first measurement event for the terminal to perform network handover, and the terminal measures multiple networks based on the measurement configuration. When a measurement result for at least one network meets the first measurement event, the terminal reports a measurement report of the at least one network to the first network-side device, and the first network-side device determines at least one candidate network in the at least one network for the terminal according to the measurement report reported by the terminal, and configures a second measurement event for the terminal to hand over to the at least one candidate network; when the terminal detects that a measurement result for a channel condition of a second network of the at least one candidate network meets a second measurement event, the terminal performs a handover operation to the second network.

In the above process, at least one candidate network will configure a corresponding resource prepared for handover for the terminal to perform the handover operation, and the resource includes, for example, a random access resource, a temporary identifier of the terminal in a candidate network. Since multiple candidate networks have configured resources prepared for handover for the terminal, but the terminal may not hand over to a candidate network for a period of time or not hand over to the candidate network at all, it will lead to a serious waste of resources prepared for handover in the candidate network.

EP2760230A1 discloses a method and network device for transferring signaling based immediate Minimization of Drive Test (MDT for short) configuration information.

EP2445264A1 discloses an information method and system of a user access mode for a handover to a hybrid home (e)NodeB cell.

US2016037417A1 discloses a mobile communications method, a device, and a system. The method implements direct communication between network devices of different standards in a mobile communications system, thereby decoupling an air interface from a terrestrial interface.

### Summary

The present invention provides a handover control method according to independent claim 1. Embodiments of the invention are defined in the dependent claims 2 to 3.

Herein, technical solutions of the examples of the present disclosure are implemented as follows.

In a first aspect, an example of the present disclosure provides a handover control method, including: sending, by a first network-side device, a first handover request to a second network-side device, wherein the first network-side device is applied to a first network, and the second network-side device is applied to a second network, and a terminal is attached to the first network, and the first handover request contains first terminal information of the terminal, and the first terminal information is used for the second network-side device to configure a resource prepared for handover to the second network for the terminal when determining that the first terminal information meets a predetermined condition for initiating a handover operation.

It can be seen that in the example of the present disclosure, the first network-side device sends a first handover request to the second network-side device, and the first handover request includes first terminal information of the terminal, and the first terminal information is used for the second network-side device to configure a resource prepared for handover for the terminal to hand over to the second network when determining that the first terminal information meets a predetermined condition for initiating a handover operation. It can be seen that, after the first network-side device transmits the first terminal information of the terminal to the second network-side device, the second network-side device can determine whether the handover operation may be initiated according to the first terminal information, and configure the resource prepared for handover only when the condition is determined to be met, thereby avoiding a resource waste of a candidate network caused by blind configuration of the resource prepared for handover by the second network-side device, which is beneficial to improving the utilization efficiency of resources of the candidate network.

In one possible design, after the first network-side device sends the first handover request to the second network-side device, the method further includes: receiving, by the first network-side device, a handover preparation confirmation message sent by the second network-side device, and sending a measurement configuration for handover to the second network to the terminal, wherein the measurement configuration for handover is used for the terminal to measure a network channel condition of the second network to obtain a first measurement result, and send a handover confirmation message to the second network-side device when detecting that the first measurement result meets a first measurement event, wherein the handover confirmation message is used for instructing the second network-side device to complete a handover operation of the terminal based on the resource prepared for handover.

In one possible design, after the first network-side device receives the handover preparation confirmation message sent by the second network-side device, the method further includes: receiving, by the first network-side device, a resource release message sent by the second network-side device for releasing a resource prepared for handover to the second network, wherein the resource release message is sent after the second network-side device releases the resource prepared for handover to the second network when the second network-side device obtains second terminal information of the terminal and determines that the second terminal information meets a predetermined condition for releasing the resource prepared for handover.

It can be seen that, in this design, the first network-side device can receive the resource release message sent by the second network-side device and release the resource prepared for handover to the second network, thus avoiding unnecessary resource overhead, which is beneficial to improving a utilization rate of resources of the first network.

In one possible design, before the first network-side device sends the first handover request to the second network-side device, the method further includes: receiving, by the first network-side device, a second measurement result sent by the terminal, wherein the second measurement result is obtained by the terminal by measuring at least one network according to a predetermined measurement configuration, and the second measurement result meets a second measurement event; and determining, by the first network-side device, at least one candidate network in the at least one network according to the second measurement result, wherein the at least one candidate network includes the second network.

In one possible design, the at least one candidate network further includes a third network, the method further includes: sending, by the first network-side device, a second handover request to a third network-side device, wherein the second handover request includes third terminal information of the terminal, and the third network-side device is applied to a third network, and the third terminal information is used for the third network-side device to send a handover preparation rejection message to the first network-side device when determining that the third terminal information does not meet a predetermined condition for initiating a handover operation; and receiving, by the first network-side device, the handover preparation rejection message and releasing a resource prepared for handover to the third network.

It can be seen that in this design, the first network-side device sends the second handover request to the third network-side device, and the second handover request contains the third terminal information of the terminal, and the third network-side device sends a handover preparation rejection message to the first network-side device when determining that the third terminal information does not meet the predetermined conditions for initiating the handover operation, instructing the first network-side device to release the resource prepared for handover to the third network, preventing the resource prepared for handover to the third network from being continuously occupied under a condition that the terminal does not hand over to the third network, which is beneficial to improving a utilization rate of resources of the third network.

In a second aspect, an example of the present disclosure provides a handover control method, including: receiving, by a second network-side device, a first handover request sent by a first network-side device, wherein the first network-side device is applied to a first network, the second network-side device is applied to a second network, a terminal is attached to the first network, and the first handover request contains first terminal information of the terminal; and configuring, by the second network-side device, a resource prepared for handover to the second network for the terminal when determining that the first terminal information meets a predetermined condition for initiating a handover operation.

It can be seen that in the example of the present disclosure, the first network-side device sends a first handover request to the second network-side device, wherein the first handover request includes first terminal information of the terminal, and the first terminal information is used for the second network-side device to configure a resource prepared for handover for the terminal to hand over to the second network when determining that the first terminal information meets a predetermined condition for initiating a handover operation. It can be seen that, after the first network-side device transmits the first terminal information of the terminal to the second network-side device, the second network-side device can determine whether the handover operation may be initiated according to the first terminal information, and configure the resource prepared for handover only when the condition is determined to be met, thereby avoiding a resource waste of a candidate network caused by blind configuration of the resource prepared for handover by the second network-side device, which is beneficial to improving the utilization efficiency of resources of the candidate network.

In one possible design, after the second network-side device configures the resource prepared for handover to the second network for the terminal, the method further includes: sending, by the second network-side device, a handover preparation confirmation message to the first network-side device, wherein the handover preparation confirmation message is used for instructing the first network-side device to send a measurement configuration for handover to the second network to the terminal, and the measurement configuration for handover is used for the terminal to send a handover confirmation message to the second network-side device when detecting that a first measurement result of a network channel condition for the second network meets a first measurement event; and receiving, by the second network-side device, the handover confirmation message sent by the terminal and completing the handover operation of the terminal based on the resource prepared for handover.

In one possible design, after the second network-side device completes the handover operation of the terminal based on the resource prepared for handover, the method further includes: obtaining, by the second network-side device, second terminal information of the terminal, determining that the second terminal information meets a predetermined condition for releasing the resource prepared for handover, and releasing the resource prepared for handover to the second network.

It can be seen that in this design, the second network-side device may further obtain the second terminal information of the terminal after completing the handover operation of the terminal, determine that the second terminal information meets the predetermined condition for releasing the resource prepared for handover, and release the resource prepared for handover. It can be seen that the second network-side device can release the resource prepared for handover in time to avoid a situation that the terminal does not need to occupy the resource prepared for handover but still occupies it, which is beneficial to improving the utilization efficiency of the resources of the candidate network.

In one possible design, after the second network-side device releases the resource prepared for handover to the second network, the method further includes: sending, by the second network-side device, a resource release message to a first network-side device, wherein the resource release message is used for instructing the first network-side device to release a resource prepared for handover to the second network.

It can be seen that in this design, the second network-side device may instruct the first network-side device to release a measurement configuration for handover to the second network in time, so as to prevent the resource of the first network-side device from being occupied by the measurement configuration for handover to the second network, which is beneficial to improving utilization efficiency of resources of the first network.

In a third aspect, an example of the present disclosure provides a handover control method, including: obtaining second terminal information of a terminal by a second network-side device; releasing, by the second network-side device, a resource prepared for handover to a second network when determining that the second terminal information meets a predetermined condition for releasing the resource prepared for handover, wherein the second network-side device is applied to the second network.

It can be seen that in the example of the present disclosure, the second network-side device can release the resource prepared for handover to the second network according to the second terminal information of the terminal, so as to prevent the resource prepared for handover to the second network from being continuously occupied under a condition that the terminal does not hand over to the second network, which is beneficial to improving the utilization efficiency of resources of the second network.

In a fourth aspect, an example of the present disclosure provides a handover control method, including: obtaining second terminal information of a terminal by a second network-side device; sending, by the second network-side device, a resource release message to a first network-side device when determining that the second terminal information meets a predetermined condition for releasing a resource prepared for handover, wherein the resource release message is used for instructing the first network-side device to release a resource prepared for handover to the second network.

It can be seen that in the example of the present disclosure, the second network-side device can notify the first network-side device to release the resource prepared for handover to the second network in time according to the second terminal information of the terminal, so as to prevent the resource prepared for handover to the second network from being continuously occupied under a condition that the terminal does not hand over to the second network, which is beneficial to improving the utilization efficiency of resources of the second network.

In a fifth aspect, an example of the present disclosure provides a handover control method, including: receiving, by a third network-side device, a second handover request sent by a first network-side device, wherein the second handover request contains third terminal information of a terminal, and the third network-side device is applied to a third network; sending, by the third network-side device, a handover preparation rejection message to the first network-side device when determining that the third terminal information does not meet a predetermined condition for initiating a handover operation, wherein the handover preparation rejection message is used for instructing the first network-side device to release a resource prepared for handover to the third network.

It can be seen that in the example of the present disclosure, the third network-side device can send the handover preparation rejection message to the first network-side device according to the third terminal information of the terminal, and the third network-side device does not configure a resource prepared for handover to the third network for the terminal, and instructs the first network-side device to release a handover measurement configuration for handover to the third network, which is beneficial to improving the utilization efficiency of resources of the first network and the third network.

In a sixth aspect, an example of the present disclosure provides a handover control method, including: receiving, by a first network-side device, access association information sent by a second network-side device, wherein the first network-side device is applied to a first network, the second network-side device is applied to a second network, and a terminal is attached to the first network; determining, by the first network-side device, the second network as a candidate network according to the access association information, and sending a handover request to the second network-side device, wherein the handover request is used for instructing the second network-side device to configure a resource prepared for handover to the second network for the terminal.

It can be seen that in the example of the present disclosure, the first network-side device receives the access association information at first, and then determines the second network as the candidate network according to the access association information, and sends the handover request to the second network-side device, wherein the handover request is used for instructing the second network-side device to configure the resource prepared for handover for the terminal to hand over to the second network. It can be seen that the first network-side device can determine a candidate network, from multiple networks, that can be used for the terminal to hand over according to the access association information, and then instruct a network-side device of the candidate network to configure a resource prepared for handover for the terminal through a request, so as to avoid a resource waste of candidate networks caused by network-side devices of all the candidate networks configuring resources prepared for handover for the terminal, i.e., to configure on demand, and a network-side device of a subsequent network that has not received the handover request does not need to configure a resource prepared for handover for the terminal, which is beneficial to improving the utilization efficiency of resources of the candidate networks.

In one possible design, before the first network-side device determines the second network as a candidate network according to the access association information, the method further includes: receiving, by the first network-side device, a first measurement result reported by the terminal, wherein the first measurement result is obtained by the terminal by measuring the second network according to a predetermined measurement configuration, and the first measurement result meets a first measurement event; the determining, by the first network-side device, the second network as a candidate network according to the access association information, includes: determining, by the first network-side device, the second network as a candidate network according to the first measurement result and the access association information.

It can be seen that in this design, the first network-side device determines whether a target network is suitable to be determined as a candidate network from two dimensions, network state information and detection results. Due to an increase in qualifications for selection of the candidate network, the quantity of finally determined candidate networks is relatively reduced, which will reduce consumption of network resources as a whole and improve the utilization efficiency of network resources.

In one possible design, after the first network-side device sends the handover request to the second network-side device, the method further includes: receiving, by the first network-side device, a handover preparation confirmation message sent by the second network-side device, and sending a measurement configuration for handover to the second network to the terminal, wherein the measurement configuration for handover is used for the terminal to measure the second network to obtain a second measurement result, and send a handover confirmation message to the second network-side device when detecting that the second measurement result meets a second measurement event, wherein the handover confirmation message is used for instructing the second network-side device to complete the handover operation of the terminal based on the resource prepared for handover.

In one possible design, the access association information is network state information of the second network; the determining, by the first network-side device, the second network as the candidate network according to the access association information, includes: determining, by the first network-side device, the second network as the candidate network when detecting that the network state information of the second network meets a first predetermined access condition.

In one possible design, the access association information is access control information of the terminal for the second network; the determining, by the first network-side device, the second network as the candidate network according to the access association information, includes: determining, by the first network-side device, the second network as the candidate network when detecting that the access control information of the second network meets a second predetermined access condition.

In a seventh aspect, an example of the present disclosure provides a handover control method, including: sending, by a second network-side device, access association information to a first network-side device, wherein the first network-side device is applied to a first network, and the second network-side device is applied to a second network, and a terminal is attached to the first network, and the access association information is used for the first network-side device to determine the second network as a candidate network and send a handover request to the second network-side device; receiving, by the second network-side device, the handover request and configuring a resource prepared for handover to the second network for the terminal.

It can be seen that in the example of the present disclosure, the first network-side device receives the access association information at first, and then determines the second network as the candidate network according to the access association information, and sends the handover request to the second network-side device, wherein the handover request is used for instructing the second network-side device to configure the resource prepared for handover for the terminal to hand over to the second network. It can be seen that the first network-side device can determine a candidate network, from multiple networks, that can be used for the terminal to hand over according to the access association information, and then instruct a network-side device of the candidate network to configure a resource prepared for handover for the terminal through a request, so as to avoid a resource waste of candidate networks caused by network-side devices of all the candidate networks configuring resources prepared for handover for the terminal, i.e., to configure on demand, and a network-side device of a subsequent network that has not received the handover request does not need to configure a resource prepared for handover for the terminal, which is beneficial to improving the utilization efficiency of resources of the candidate networks.

In one possible design, after the second network-side device configures the resource prepared for handover to the second network for the terminal, the method further includes: sending, by the second network-side device, a handover preparation confirmation message to the first network-side device, wherein the handover preparation confirmation message is used for instructing the first network-side device to send a measurement configuration for handover to the second network to the terminal, and the measurement configuration for handover is used for the terminal to measure the second network to obtain a second measurement result, and send a handover confirmation message to the second network-side device when detecting that the second measurement result meets a second measurement event; receiving, by the second network-side device, the handover confirmation message and completing the handover operation of the terminal based on the resource prepared for handover.

In an eighth aspect, an example of the present disclosure provides a network-side device with functions of implementing the behaviors of the first network-side device in the first aspect of the method design. The functions may be implemented by using hardware, or may be implemented by executing corresponding software through hardware. The hardware or software includes one or more modules corresponding to the foregoing functions.

In a possible design, the network-side device includes a processor. The processor is used for supporting the network-side device to execute corresponding functions in the methods. Moreover, the network-side device may further include a transceiver. The transceiver is used for supporting communication between a terminal and the network-side device. Further, the network-side device may further include a memory for coupling with the processor, which stores necessary program instructions and data of the network-side device.

In a ninth aspect, the example of the present disclosure provides a network-side device with functions of implementing the behaviors of the second network-side device in the second aspect of the method design. The functions may be implemented by using hardware, or may be implemented by executing corresponding software through hardware. The hardware or software includes one or more modules corresponding to the foregoing functions.

In a possible design, the network-side device includes a processor. The processor is used for supporting the network-side device to execute corresponding functions in the methods. Moreover, the network-side device may further include a transceiver. The transceiver is used for supporting communication between a terminal and the network-side device. Further, the network-side device may further include a memory for coupling with the processor, which stores necessary program instructions and data of the network-side device.

In a tenth aspect, an example of the present disclosure provides a network-side device with functions of implementing the behaviors of the second network-side device in the third aspect of the method design. The functions may be implemented by using hardware, or may be implemented by executing corresponding software through hardware. The hardware or software includes one or more modules corresponding to the foregoing functions.

In a possible design, the network-side device includes a processor. The processor is used for supporting the network-side device to execute corresponding functions in the methods. Moreover, the network-side device may further include a transceiver. The transceiver is used for supporting communication between a terminal and network-side device. Further, the network-side device may further include a memory for coupling with the processor, which stores necessary program instructions and data of the network-side device.

In an eleventh aspect, an example of the present disclosure provides a network-side device with functions of implementing the behaviors of the second network-side device in the fourth aspect of the method design. The functions may be implemented by using hardware, or may be implemented by executing corresponding software through hardware. The hardware or software includes one or more modules corresponding to the foregoing functions.

In a possible design, the network-side device includes a processor. The processor is used for supporting the network-side device to execute corresponding functions in the methods. Moreover, the network-side device may further include a transceiver. The transceiver is used for supporting communication between a terminal and the network-side device. Further, the network-side device may further include a memory for coupling with the processor, which stores necessary program instructions and data of the network-side device.

In a twelfth aspect, the example of the present disclosure provides a network-side device with functions of implementing the behaviors of the third network-side device in the fifth aspect of the method design. The functions may be implemented by using hardware, or may be implemented by executing corresponding software through hardware. The hardware or software includes one or more modules corresponding to the foregoing functions.

In a possible design, the network-side device includes a processor. The processor is used for supporting the network-side device to execute corresponding functions in the methods. Moreover, the network-side device may further include a transceiver. The transceiver is used for supporting communication between a terminal and the network-side device. Further, the network-side device may further include a memory for coupling with the processor, which stores necessary program instructions and data of the network-side device.

In a thirteenth aspect, an example of the present disclosure provides a network-side device with functions of implementing the behaviors of the first network-side device in the sixth aspect of the method design. The functions may be implemented by using hardware, or may be implemented by executing corresponding software through hardware. The hardware or software includes one or more modules corresponding to the foregoing functions.

In a possible design, the network-side device includes a processor. The processor is used for supporting the network-side device to execute corresponding functions in the methods. Moreover, the network-side device may further include a transceiver. The transceiver is used for supporting communication between a terminal and the network-side device. Further, the network-side device may further include a memory for coupling with the processor, which stores necessary program instructions and data of the network-side device.

In a fourteenth aspect, the example of the present disclosure provides a network-side device with functions of implementing the behaviors of the second network-side device in the seventh aspect of the method design. The functions may be implemented by using hardware, or may be implemented by executing corresponding software through hardware. The hardware or software includes one or more modules corresponding to the foregoing functions.

In a possible design, the network-side device includes a processor. The processor is used for supporting the network-side device to execute corresponding functions in the methods. Moreover, the network-side device may further include a transceiver. The transceiver is used for supporting communication between a terminal and the network-side device. Further, the network-side device may further include a memory for coupling with the processor, which stores necessary program instructions and data of the network-side device.

In a fifteenth aspect, an example of the present disclosure provides a communication system including the terminal and the network-side device described in the above aspects.

In a sixteenth aspect, examples of the present disclosure provide a computer-readable storage medium having instructions stored therein that, when executed on a computer, cause the computer to perform the method described in the first or second or third or fourth or fifth or sixth aspect.

In a seventeenth aspect, an example of the present disclosure provides a computer program product containing instructions that, when executed on a computer, cause the computer to perform the method described in the first or second or third or fourth or fifth or sixth or seventh aspect.

As can be seen from the above, in the first aspect and the second aspect of the example of the present disclosure, the first network-side device sends a first handover request to the second network-side device, wherein the first handover request includes first terminal information of the terminal, and the first terminal information is used for the second network-side device to configure a resource prepared for handover for the terminal to hand over to the second network when determining that the first terminal information meets a predetermined condition for initiating a handover operation. It can be seen that, after the first network-side device transmits the first terminal information of the terminal to the second network-side device, the second network-side device can determine whether the handover operation may be initiated according to the first terminal information, and configure the resource prepared for handover only when the condition is determined to be met, thereby avoiding a resource waste of a candidate network caused by blind configuration of the resource prepared for handover by the second network-side device, which is beneficial to improving the utilization efficiency of resources of the candidate network.

In the third aspect of the example of the present disclosure, the second network-side device can release the resource prepared for handover to the second network according to the second terminal information of the terminal, so as to prevent the resource prepared for handover to the second network from being continuously occupied under a condition that the terminal does not hand over to the second network, which is beneficial to improving the utilization efficiency of resources of the second network.

In the fourth aspect of the example of the present disclosure, the second network-side device can notify the first network-side device to release a resource prepared for handover to the second network according to the second terminal information of the terminal, so as to prevent the resource prepared for handover to the second network from being continuously occupied under a condition that the terminal does not hand over to the second network, which is beneficial to improving the utilization efficiency of resources of the second network.

In the fifth aspect of the example of the present disclosure, the third network-side device can send the handover preparation rejection message to the first network-side device according to the third terminal information of the terminal, and the third network-side device does not configure a resource prepared for handover to the third network for the terminal, and instructs the first network-side device to release a handover measurement configuration for handover to the third network, which is beneficial to improving the utilization efficiency of resources of the first network and the third network.

In the sixth aspect and the seventh aspect of the example of the present disclosure, the first network-side device receives the access association information at first, and then determines the second network as the candidate network according to the access association information, and sends the handover request to the second network-side device, wherein the handover request is used for instructing the second network-side device to configure the resource prepared for handover for the terminal to hand over to the second network. It can be seen that the first network-side device can determine a candidate network, from multiple networks, that can be used for the terminal to hand over according to the access association information, and then instruct a network-side device of the candidate network to configure a resource prepared for handover for the terminal through a request, so as to avoid a resource waste of candidate networks caused by network-side devices of all the candidate networks configuring resources prepared for handover for the terminal, i.e., to configure on demand, and a network-side device of a subsequent network that has not received the handover request does not need to configure a resource prepared for handover for the terminal, which is beneficial to improving the utilization efficiency of resources of the candidate networks.

### Brief Description of Drawings

In the following, the accompanying drawings used for describing examples or the prior art are briefly explained.
FIG. 1 is a schematic diagram of network architecture of a mobile communication system provided by an example of the present disclosure.
FIG. 2 is a flow chart of a handover control method provided by an example of the present disclosure.
FIG. 3 is a flow chart of another handover control method provided by an example of the present disclosure.
FIG. 4 is a flow chart of another handover control method provided by an example of the present disclosure.
FIG. 5 is a flow chart of another handover control method provided by an example of the present disclosure.
FIG. 6 is a flow chart of another handover control method provided by an example of the present disclosure.
FIG. 7A is a schematic structural diagram of a network-side device provided by an example of the present disclosure.
FIG. 7B is a schematic structural diagram of another network-side device provided by an example of the present disclosure.
FIG. 8A is a schematic structural diagram of a network-side device provided by an example of the present disclosure.
FIG. 8B is a schematic structural diagram of another network-side device provided by an example of the present disclosure.
FIG. 9A is a schematic structural diagram of a network-side device provided by an example of the present disclosure.
FIG. 9B is a schematic structural diagram of another network-side device provided by an example of the present disclosure.

### Detailed Description

Technical solutions in examples of the present disclosure will be described with reference to the accompanying drawings.

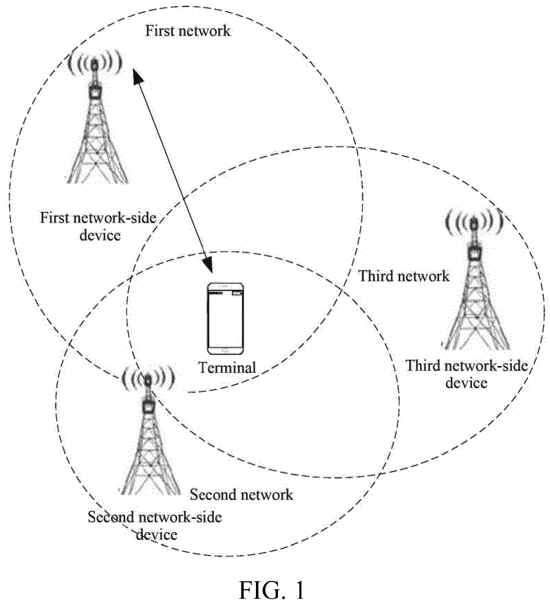

Referring to FIG. 1, FIG. 1 illustrates a possible network architecture provided by an example of the present disclosure. The network architecture includes network-side devices and a terminal, wherein the network-side devices include a first network-side device of a first network, a second network-side device of a second network, and a third network-side device of a third network. When a terminal accesses a mobile communication network provided by a network-side device, the terminal and the network-side device may be communicatively connected through a wireless link. The network-side device may be, for example, an access network device (such as a base station, a Radio Access Network (RAN) network node, a RAN transmission point) in a 5G network, a 4G network, or a network of other standard. In the example of the present disclosure, the terms "network" and "system" are often used alternately, but persons skilled in the art may understand the meanings thereof. Terminals related to examples of the present disclosure may include various handheld devices with wireless communication functions, vehicular devices, wearable devices, computing devices or other processing devices connected to a wireless modem, and various types of user equipment (UE), mobile stations (MSs), terminal devices, and the like. For ease of description, the devices mentioned above are all referred to as terminals.

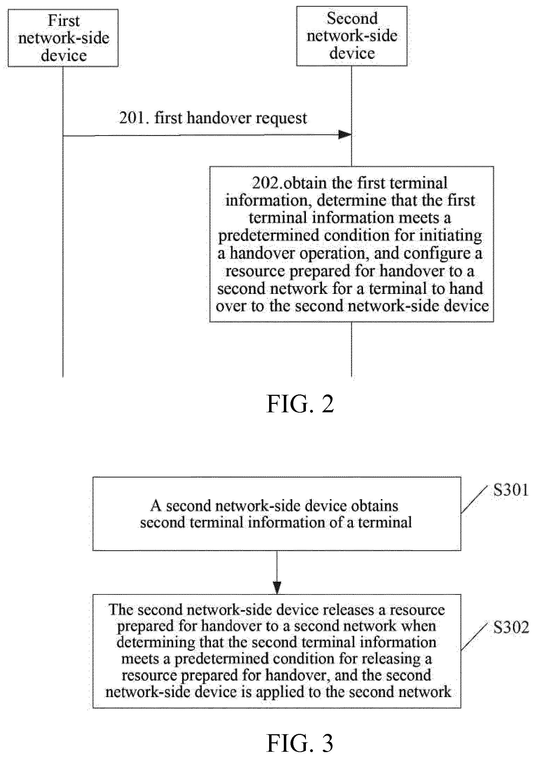

Referring to FIG. 2, FIG. 2 is a handover control method provided by an example of the present disclosure, which is applied to a mobile communication network including a first network-side device, a second network-side device, a third network-side device, and a terminal. The first network-side device, the second network-side device, the third network-side device, and the terminal are in identical communication connection. The method includes: parts 201 and 202, specifically as follows.

In part 201, a first network-side device sends a first handover request to a second network-side device, wherein the first network-side device is applied to a first network, the second network-side device is applied to a second network, a terminal is attached to the first network, and the first handover request contains first terminal information of the terminal.

The first terminal information includes at least one of the following: 1) grade of a terminal; 2) priority of a terminal; 3) service level of a terminal; 4) Quality of Service (QoS) level of a service of a terminal, such as latency information, transmission reliability information; 5) type of a terminal, such as a Machine type communication (MTC) terminal, an ultra reliable & low latency communication (URLLC) terminal, a low cost terminal; 6) Core network identifier of a core network registered by a terminal.

The terminal is initially attached to the first network of the first network-side device, and a network standard of the first network may be, for example, 5G network, 4G network, or other network, and the example of the present disclosure is not limited to this.

In part 202, the second network-side device receives the first handover request, obtains the first terminal information, determines that the first terminal information meets a predetermined condition for initiating a handover operation, and configures a resource prepared for handover to the second network for the terminal.

The second network-side device may obtain the first terminal information by act 202, or the second network-side device may obtain the first terminal information of the terminal from an access network device or a core network device or other storage entity of other network.

In one possible example, a specific implementation manner of determining by the second network-side device that the first terminal information meets the predetermined condition for initiating the handover operation is as follows.

When the first terminal information is a grade of the terminal, a specific implementation manner of determining by the second network-side device that the first terminal information meets the predetermined condition for initiating the handover operation is: when the second network-side device detects that the grade of the terminal is a predetermined grade, the second network-side device determines that the first terminal information meets the predetermined condition for initiating the handover operation.

The predetermined grade may be set in advance, for example, the grade of the terminal may be any one or more of 0-15.

When the first terminal information is a priority of the terminal, a specific implementation manner of determining by the second network-side device that the first terminal information meets the predetermined condition for initiating the handover operation is: when the second network-side device detects that the priority of the terminal is a predetermined priority, the second network-side device determines that the first terminal information meets the predetermined condition for initiating the handover operation.

The predetermined priority may be set in advance, and a specific value is not limited.

When the first terminal information is a service level of the terminal, a specific implementation manner of determining by the second network-side device that the first terminal information meets the predetermined condition for initiating the handover operation is: when the second network-side device detects that the service level of the terminal is a predetermined service level, the second network-side device determines that the first terminal information meets the predetermined condition for initiating the handover operation.

The predetermined service level may be, for example, high, medium, or low service level.

When the first terminal information is a QoS level of the service of the terminal, a specific implementation manner of determining by the second network-side device that the first terminal information meets the predetermined condition for initiating the handover operation is: when the second network-side device detects that the QoS level of the service of the terminal is a predetermined QoS level, the second network-side device determines that the first terminal information meets the predetermined condition for initiating the handover operation.

The predetermined QoS level may be set in advance, and a specific value is not limited.

When the first terminal information is a type of the terminal, a specific implementation manner of determining by the second network-side device that the first terminal information meets a predetermined condition for initiating a handover operation is: when the second network-side device detects that the terminal type of the terminal is a predetermined terminal type, the second network-side device determines that the first terminal information meets the predetermined condition for initiating a handover operation.

The predetermined terminal type may be, for example, a low-cost type terminal, a vehicle networking type terminal, or an MTC type terminal.

When the first terminal information is a core network identifier of a core network registered by the terminal, a specific implementation manner of determining by the second network-side device that the first terminal information meets the predetermined condition for initiating the handover operation is: when the second network-side device detects that the core network identifier is a predetermined core network identifier, it determines that the first terminal information meets the predetermined condition for initiating the handover operation.

The predetermined core network identifier may be set in advance, and a specific value is not limited.

In one possible example, the resource prepared for handover may include context, a Radio Resource Control (RRC) configuration, a random access resource, and a handover link established for a terminal between candidate networks.

It can be seen that in the example of the present disclosure, the first network-side device sends a first handover request to the second network-side device, and the first handover request includes first terminal information of the terminal, and the first terminal information is used for the second network-side device to configure a resource prepared for handover for the terminal to hand over to the second network when determining that the first terminal information meets a predetermined condition for initiating a handover operation. It can be seen that, after the first network-side device transmits the first terminal information of the terminal to the second network-side device, the second network-side device can determine whether the handover operation may be initiated according to the first terminal information, and configure the resource prepared for handover only when the condition is determined to be met, thereby avoiding the resource waste of a candidate network caused by blind configuration of the resource prepared for handover by the second network-side device, which is beneficial to improving the utilization efficiency of resources of the candidate network.

In one possible example, after the second network-side device configures the resource prepared for handover for the terminal to hand over to the second network of the second network-side device, the method further includes: the second network-side device sends a handover preparation confirmation message to the first network-side device.

The first network-side device receives the handover preparation confirmation message and sends a measurement configuration for handover to the second network to the terminal.

The measurement configuration for handover includes the network identifier and description information of the resource prepared for handover.

The terminal receives the measurement configuration for handover, measures the network channel condition of the second network to obtain a first measurement result, and sends a handover confirmation message to the second network-side device when detecting that the first measurement result meets a first measurement event.

The second network-side device responds to the handover confirmation message and completes the handover operation of the terminal based on the resource prepared for handover.

In one possible example, after the second network-side device responds to the handover confirmation message and completes the handover operation of the terminal based on the resource prepared for handover, the method further includes: the second network-side device obtains second terminal information of the terminal, determines that the second terminal information meets a predetermined condition for releasing the resource prepared for handover, and releases the resource prepared for handover to the second network.

In one possible example, after the second network-side device responds to the handover confirmation message and completes the handover operation of the terminal based on the resource prepared for handover, the method further includes: the second network-side device obtains second terminal information of the terminal, determines that the second terminal information meets a predetermined condition for releasing the resource prepared for handover, and sends a resource release message to the first network-side device.

The first network-side device receives the resource release message and releases a resource prepared for handover to the second network.

The resource release message contains a reason for releasing the resource prepared for handover.

It can be seen that in this example, the first network-side device can receive the resource release message sent by the second network-side device and release the resource prepared for handover to the second network, thus avoiding unnecessary resource overhead, which is beneficial to improving a utilization rate of resources of the first network.

In one possible example, before the first network-side device sends the first handover request to the second network-side device, the method further includes: the terminal measures a channel condition of each network in at least one network according to a predetermined measurement configuration to obtain a second measurement result, and when detecting that the second measurement result meets a second measurement event, it reports the second measurement result to the first network-side device.

The predetermined measurement configuration is a measurement configuration for network handover, and the measurement configuration includes a measurement object, a measurement reporting criterion, a measurement amount, a reporting amount, and the like.

The second measurement event may be configured by the first network-side device for the terminal in advance.

The first network-side device determines at least one candidate network in the at least one network according to the second measurement result, and the at least one candidate network includes a second network of the second network-side device and a third network of the third network-side device.

In this possible example, the method further includes: the first network-side device sends a second handover request to the third network-side device, wherein the second handover request includes third terminal information of the terminal; the third network-side device receives the second handover request, obtains the third terminal information, determines that the third terminal information does not meet a predetermined condition for initiating a handover operation, and sends a handover preparation rejection message to the first network-side device.

The handover preparation rejection message contains a reason for rejecting a handover.

The first network-side device receives the handover preparation rejection message and releases a resource prepared for handover to the third network.

It can be seen that in this example, the first network-side device sends a second handover request to the third network-side device, and the second handover request contains the third terminal information of the terminal, and the third network-side device sends a handover preparation rejection message to the first network-side device when determining that the third terminal information does not meet the predetermined conditions for initiating the handover operation, instructing the first network-side device to release a resource prepared for handover to the third network, preventing the resource prepared for handover to the third network from being continuously occupied under the condition that the terminal does not hand over to the third network, which is beneficial to improving the utilization efficiency of resources of the third network.

Referring to FIG. 3, FIG. 3 is a handover control method provided by an example of the present disclosure, which is applied to a mobile communication network including a first network-side device, a second network-side device, a third network-side device, and a terminal. The first network-side device, the second network-side device, the third network-side device, and the terminal are in identical communication connection. The method includes: parts 301 and 302, specifically as follows.

In part 301, a second network-side device obtains second terminal information of a terminal.

In part 302, the second network-side device releases a resource prepared for handover to a second network when determining that the second terminal information meets a predetermined condition for releasing a resource prepared for handover, and the second network-side device is applied to the second network.

It can be seen that in the example of the present disclosure, the second network-side device can release the resource prepared for handover to the second network according to the second terminal information of the terminal, so as to prevent the resource prepared for handover to the second network from being continuously occupied under the condition that the terminal does not hand over to the second network, which is beneficial to improving the utilization efficiency of resources of the second network.

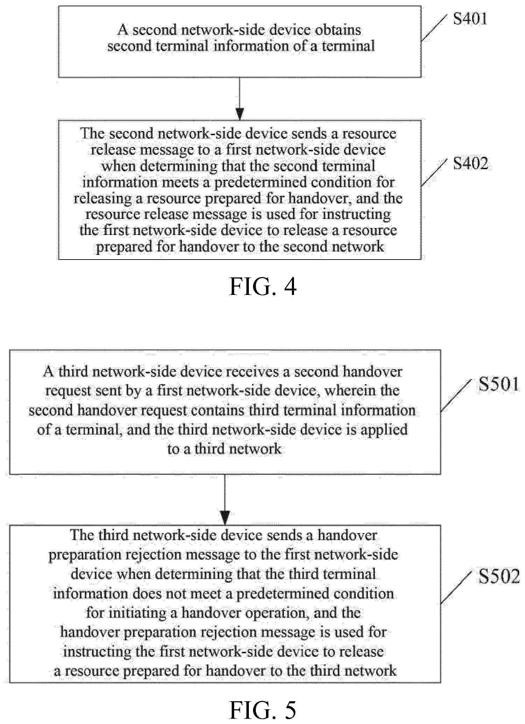

Referring to FIG. 4, FIG. 4 is a handover control method provided by an example of the present disclosure, which is applied to a mobile communication network including a first network-side device, a second network-side device, a third network-side device, and a terminal. The first network-side device, the second network-side device, the third network-side device, and the terminal are in identical communication connection. The method includes: parts 401 and 402, specifically as follows.

In part 401, a second network-side device obtains second terminal information of a terminal.

In part 402, the second network-side device sends a resource release message to a first network-side device when determining that the second terminal information meets a predetermined condition for releasing a resource prepared for handover, wherein the resource release message is used for instructing the first network-side device to release a resource prepared for handover to the second network.

It can be seen that in the example of the present disclosure, the second network-side device can notify the first network-side device to release the resource prepared for handover to the second network in time according to the second terminal information of the terminal, so as to prevent the resource prepared for handover to the second network from being continuously occupied under a condition that the terminal does not hand over to the second network, which is beneficial to improving the utilization efficiency of resources of the second network.

Referring to FIG. 5, which is a handover control method provided by an example of the present disclosure, which is applied to a mobile communication network including a first network-side device, a second network-side device, a third network-side device, and a terminal. The first network-side device, the second network-side device, the third network-side device, and the terminal are in identical communication connection. The method includes: parts 501 and 502, specifically as follows.

In part 501, a third network-side device receives a second handover request sent by a first network-side device, wherein the second handover request contains third terminal information of a terminal, and the third network-side device is applied to a third network.

In part 502, the third network-side device sends a handover preparation rejection message to the first network-side device when determining that the third terminal information does not meet a predetermined condition for initiating a handover operation, wherein the handover preparation rejection message is used for instructing the first network-side device to release a resource prepared for handover to the third network.

It can be seen that in the example of the present disclosure, the third network-side device can send the handover preparation rejection message to the first network-side device according to the third terminal information of the terminal, and the third network-side device does not configure a resource prepared for handover to the third network for the terminal, and instructs the first network-side device to release a handover measurement configuration for handover to the third network, which is beneficial to improving the utilization efficiency of resources of the first network and the third network.

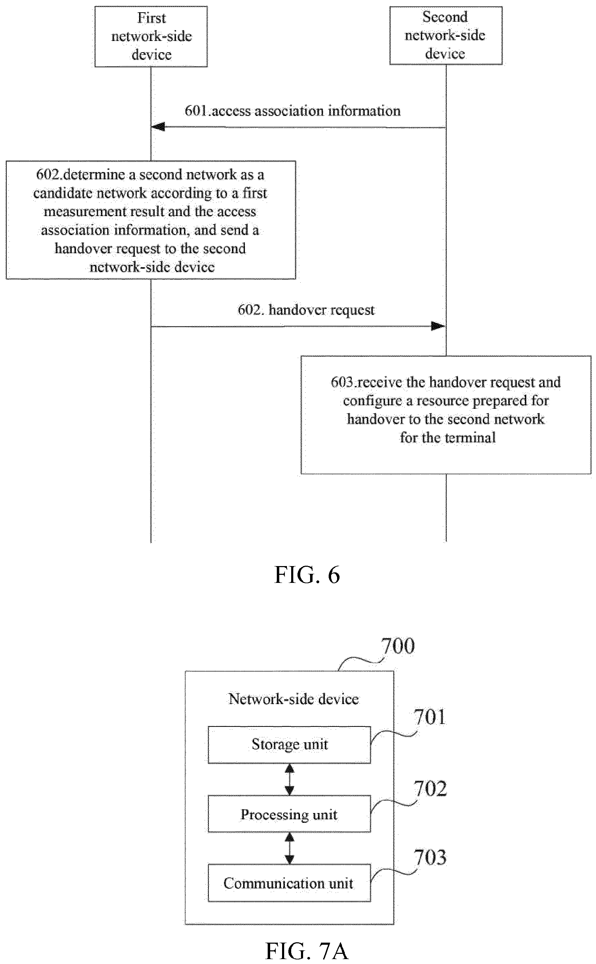

Referring to FIG. 6, FIG. 6 is a handover control method provided by an example of the present disclosure, which is applied to a mobile communication network including a first network-side device, a second network-side device and a terminal, wherein the first network-side device, the second network-side device and the terminal are in identical communication connection. The method includes parts 601-603, specifically as follows.

In part 601, a second network-side device sends access association information to a first network-side device.

The access association information is network state information of a second network of the second network-side device and/or access control information of a terminal for the second network.

The network state information of the second network includes at least one of the following: 1) network congestion degree, such as high, medium, low, no congestion; 2) congestion degree of a control plane or congestion degree of a user plane; 3) description information on whether an access is allowed, such as allowing the access or prohibiting the access.

The access control information is any one of the following access control information: 1) access control information for an access level or a priority of a terminal; 2) access control information for service information of a terminal, the service information including at least one of: an application level of a service initiated by a terminal, a call reason of a service initiated by a terminal, an establishment reason of an access initiated by a terminal, a QoS attribute of a service initiated by a terminal, etc.; 3) access control information for a type of a terminal, such as a low-cost terminal, an MTC terminal, a URLLC terminal; 4) access control information for each core network.

The access control information includes at least one of the following: whether a handover access is allowed or not, and a probability of allowing a handover access.

In 602, the first network-side device determines a second network as a candidate network according to the access association information, and sends a handover request to the second network-side device.

In 603, the second network-side device receives the handover request and configures a resource prepared for handover to the second network for the terminal.

In one possible example, the resource prepared for handover may include context, an RRC configuration, a random access resource, and a handover link established for a terminal between candidate networks.

As can be seen, in the example of the present disclosure, the first network-side device receives the access association information at first, and then determines the second network as the candidate network according to the access association information, and sends the handover request to the second network-side device, wherein the handover request is used for instructing the second network-side device to configure the resource prepared for handover for the terminal to hand over to the second network. It can be seen that the first network-side device can determine a candidate network, from multiple networks, which can be used for the terminal to hand over according to the access association information, and then instruct a network-side device of the candidate network to configure a resource prepared for handover for the terminal through a request, so as to avoid resource waste of candidate networks caused by network-side devices of all the candidate networks configuring resources prepared for handover for the terminal, i.e., to configure on demand, and a network-side device of a subsequent network that has not received the handover request does not need to configure a resource prepared for handover for the terminal, which is beneficial to improving the utilization efficiency of resources of the candidate networks.

In one possible example, before the first network-side device determines the second network as a candidate network according to the access association information, the method further includes: the terminal measures a channel condition of the second network according to a predetermined measurement configuration to obtain a first measurement result, and when detecting that the first measurement result meets a first measurement event, it reports the first measurement result to a first network-side device.

The predetermined measurement configuration is a measurement configuration for network handover sent by the first network-side device, and the measurement configuration includes a measurement object, a measurement reporting criterion, a measurement amount, a reporting amount, and the like.

The first measurement event may be that a first measurement result of measurement data is greater than or equal to a first predetermined threshold, and the measurement data may be, for example, a reference signal reception power (RSRP), a received signal strength indication (RSSI), a reference signal reception quality (RSRQ), or an offset value (A3 Offset) that a quality of service of a neighboring cell is higher than a quality of service of a serving cell by. The first measurement result may specifically be a difference between second measurement data of the second network and first measurement data of the first network.

A specific implementation manner for the first network-side device to determine the second network as the candidate network according to the access association information is as follows: the first network-side device determines the second network as a candidate network according to the first measurement result and the access association information.

It can be seen that in this example, the first network-side device determines whether a target network is suitable to be determined as a candidate network from two dimensions, i.e. network state information and detection results. Due to an increase in qualifications for selection of the candidate network, the quantity of finally determined candidate networks is relatively reduced, which will reduce consumption of network resources as a whole and improve the utilization efficiency of network resources.

In one possible example, after the first network-side device sends the handover request to the second network-side device, the method further includes: the second network-side device sends a handover preparation confirmation message to the first network-side device.

The first network-side device receives the handover preparation confirmation message and sends a measurement configuration for handover to the second network to the terminal.

The measurement configuration for handover includes the network identifier and description information of the resource prepared for handover.

The terminal receives the configuration information, measures network channel condition of the second network to obtain a second measurement result, and sends a handover confirmation message to the second network-side device when detecting that the second measurement result meets a second measurement event.

The second measurement event may be configured by the first network-side device for the terminal in advance.

The second network-side device responds to the handover confirmation message and completes the handover operation of the terminal based on the resource prepared for handover.

In one possible example, the access association information is network state information of the second network; and a specific implementation manner for the first network-side device to determine the second network as the candidate network according to the access association information may be as follows: the first network-side device determines the second network as a candidate network when detecting that the network state information of the second network meets a first predetermined access condition.

In this possible example, a specific implementation manner for the first network-side device to detect that the network state information of the second network meets the first predetermined access condition is as follows: when the network state information is a network congestion degree, the first predetermined condition is that a network congestion degree of the second network is less than a predetermined congestion degree.

When the network state information is a congestion degree of a control plane, the first predetermined condition is that a network congestion degree of the control plane is less than a predetermined congestion degree.

When the network state information is a congestion degree of a user plane, the first predetermined condition is that a network congestion degree of the user plane is less than a predetermined congestion degree.

When the network state information is description information whether an access is allowed, the first predetermined condition is that the description information whether the access is allowed is allowing the access.

In one possible example, the access association information is access control information of the terminal for the second network; the determining, by the first network-side device, the second network as the candidate network according to the access association information, includes: the first network-side device determines the second network as the candidate network when detecting that the access control information of the second network meets a second predetermined access condition.

In this possible example, a specific implementation manner for the first network-side device to detect that the access control information of the second network meets a second predetermined access condition is as follows: when the access control information is whether a handover access is allowed, the second predetermined access condition is that the access control information is allowing the access.

When the access control information is a probability of allowing a handover access, the second predetermined access condition is that the probability of allowing the handover access is greater than a predetermined probability of allowing a handover access.

The solutions provided in the example of the present disclosure are mainly described from a perspective of interaction between network elements. It can be understood that the network-side device includes corresponding hardware structures and/or software modules for performing various functions, so as to implement the functions. A person skilled in the art should easily understand that, in combination with units and algorithm acts in examples described with reference to the examples disclosed in this document, the present disclosure can be implemented by hardware or a combination of hardware and computer software. Whether a function is performed by hardware or computer software driving hardware depends on a particular application and a design constraint condition of the technical solution. Skilled in the art may use different methods to realize the described functions for each particular application, but such realization should not be considered to be beyond the scope of the present disclosure.

Division for functional units can be performed for the network-side device in the examples of the present disclosure according to the method examples. For example, various functional units may be divided according to various functions, or two or more functions may be integrated into one processing unit. The above integrated unit can be implemented in a form of hardware, or can be implemented in a form of software function unit. It should be noted that, the division for the units in examples of the present disclosure is exemplary, and is merely a logical function division. There may be other divisions in an actual realization.

In the case of using integrated units, FIG. 7A shows a possible structural diagram of the network-side device involved in the examples, which is the first network-side device in the mobile communication system shown in FIG. 1. A network-side device 700 includes a processing unit 702 and a communication unit 703. The processing unit 702 is used for controlling and managing acts of the network-side device. For example, the processing unit 702 is used for supporting the network-side device to execute act 201 in FIG. 2, act 602 in FIG. 6, and/or other processes for the techniques described in this document. The communication unit 703 is used for supporting communication between the network-side device and other devices, such as communication between the second network-side device and the terminal as illustrated in FIG. 1. The network-side device may further include a storage unit 701 used for storing program codes and data of the network-side device.

The processing unit 702 may be a processor or a controller such as a Central Processing Unit (CPU), a general purpose processor, a Digital Signal Processor (DSP), an Application-Specific Integrated Circuit (ASIC), a Field Programmable Gate Array (FPGA), or other programmable logic device, transistor logic device, hardware component, or any combination thereof. The processing unit may implement or execute various illustrative logical blocks, modules, and circuits described in connection with the disclosure of the present disclosure. A processor may also be a combination for implementing computing functions, e.g., a combination including one or more microprocessors, a combination of a DSP and a microprocessor. The communication unit 703 may be a transceiver or a transceiving circuit. The storage unit 701 may be a memory.

The processing unit 702 is used for sending a first handover request to a second network-side device through the communication unit, wherein the first network-side device is applied to a first network, and the second network-side device is applied to a second network, and the terminal is attached to the first network, and the first handover request contains first terminal information of the terminal, and the first terminal information is used for the second network-side device to configure a resource prepared for handover to the second network for the terminal when determining that the first terminal information meets a predetermined condition for initiating a handover operation.

In one possible example, after the processing unit 702 sends the first handover request to the second network-side device through the communication unit 703, the processing unit 702 is further used for receiving a handover preparation confirmation message sent by the second network-side device through the communication unit 703, and sending a measurement configuration for handover to the second network to the terminal through the communication unit 703, wherein the measurement configuration for handover is used for the terminal to measure a network channel condition of the second network to obtain a first measurement result, and to send a handover confirmation message to the second network-side device when detecting that the first measurement result meets a first measurement event, wherein the handover confirmation message is used for instructing the second network-side device to complete a handover operation of the terminal based on the resource prepared for handover.

In one possible example, after the processing unit 702 receives the handover preparation confirmation message sent by the second network-side device through the communication unit 703, the processing unit 702 is further used for receiving through the communication unit 703 a resource release message sent by the second network-side device for releasing a resource prepared for handover to the second network, wherein the resource release message is sent after the second network-side device releases the resource prepared for handover to the second network when the second network-side device obtains second terminal information of the terminal and determines that the second terminal information meets a predetermined condition for releasing the resource prepared for handover.

In one possible example, before the processing unit 702 sends the first handover request to the second network-side device through the communication unit 703, the processing unit 702 is further used for receiving a second measurement result sent by the terminal through the communication unit 703, wherein the second measurement result is obtained by the terminal by measuring at least one network according to a predetermined measurement configuration, and the second measurement result meets a second measurement event; and the processing unit 702 is further used for determining at least one candidate network in the at least one network according to the second measurement result, wherein the at least one candidate network includes the second network.

In one possible example, the processing unit 702 is further used for sending a second handover request to a third network-side device through the communication unit 703, wherein the second handover request includes third terminal information of the terminal, and the third network-side device is applied to a third network, and the third terminal information is used for the third network-side device to send a handover preparation rejection message to the first network-side device when determining that the third terminal information does not meet a predetermined condition for initiating a handover operation; and the processing unit 702 is further used for receiving the handover preparation rejection message through the communication unit 703 and releasing a resource prepared for handover to the third network.

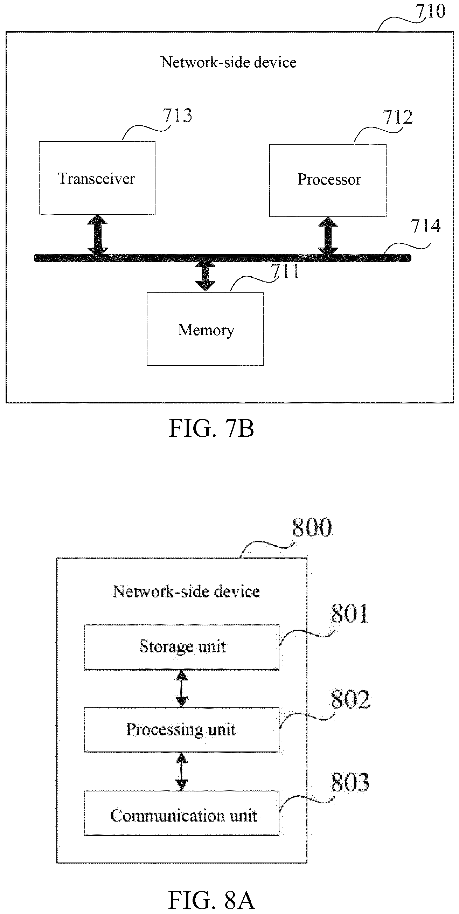

When the processing unit 702 is a processor, the communication unit 703 is a communication interface, and the storage unit 701 is a memory, the network-side device related to the example of the present disclosure may be the network-side device shown in FIG. 7B.

Referring to FIG. 7B, the network-side device 710 includes a processor 712, a transceiver 713, and a memory 711. Optionally, the network-side device 710 may further include a bus 714. The transceiver 713, the processor 712, and the memory 711 may be connected to each other through a bus 714. The bus 714 may be a Peripheral Component Interconnect (PCI) bus or an Extended Industry Standard Architecture (EISA) bus or the like. The bus 714 may be categorized as an address bus, a data bus, a control bus, etc. For convenience of representation, only one thick line is used in FIG. 7B to represent the bus, but it does not represent only one bus or one type of bus.

The network-side device shown in FIG. 7A or FIG. 7B may be understood as an apparatus for the first network-side device, and the example of the present disclosure is not limited to this.

In the case of using integrated units, FIG. 8A shows a possible structural diagram of the network-side device involved in the example, which is the second network-side device in the mobile communication system shown in FIG. 1. A network-side device 800 includes a processing unit 802 and a communication unit 803. The processing unit 802 is used for controlling and managing acts of the network-side device. For example, the processing unit 802 is used for supporting the network-side device to execute act 202 in FIG. 2, acts 301 and 302 in FIG. 3, acts 401 and 402 in FIG. 4, acts 601 and 603 in FIG. 6, and/or other processes for the techniques described in this document. The communication unit 803 is used for supporting communication between the network-side device and other devices, such as communication between the terminal and the network-side device as illustrated in FIG. 1. The network-side device may further include a storage unit 801 used for storing program codes and data of the network-side device.

The processing unit 802 may be a processor or a controller such as a Central Processing Unit (CPU), a general purpose processor, a Digital Signal Processor (DSP), an Application-Specific Integrated Circuit (ASIC), a Field Programmable Gate Array (FPGA), or other programmable logic device, transistor logic device, hardware component, or any combination thereof. The processing unit may implement or execute various illustrative logical blocks, modules, and circuits described in connection with the disclosure of the present disclosure. A processor may also be a combination for implementing computing functions, e.g., a combination including one or more microprocessors, a combination of a DSP and a microprocessor. The communication unit 803 may be a transceiver or a transceiving circuit. The storage unit 801 may be a memory.

The processing unit 802 is used for receiving a first handover request sent by a first network-side device through the communication unit 803, wherein the first network-side device is applied to a first network, and the second network-side device is applied to a second network, and the terminal is attached to the first network, and the first handover request includes first terminal information of the terminal; and configuring a resource prepared for handover to the second network for the terminal when determining that the first terminal information meets a predetermined condition for initiating a handover operation.

In one example, after the processing unit 802 configures the resource prepared for handover to the second network for the terminal, the processing unit 802 is further used for sending a handover preparation confirmation message to the first network-side device through the communication unit 803, wherein the handover preparation confirmation message is used for instructing the first network-side device to send a measurement configuration for handover to the second network to the terminal, and the measurement configuration for handover is used for the terminal to send a handover confirmation message to the second network-side device when detecting that a first measurement result for a network channel condition of the second network meets a first measurement event; and receiving the handover confirmation message sent by the terminal through the communication unit 803 and completing a handover operation of the terminal based on the resource prepared for handover.

In one example, the processing unit 802 is further used for obtaining second terminal information of the terminal through the communication unit 803 after completing the handover operation of the terminal based on the resource prepared for handover, determining that the second terminal information meets a predetermined condition for releasing the resource prepared for handover, and releasing the resource prepared for handover to the second network.

In one example, the processing unit 802 is further used for obtaining second terminal information of the terminal through the communication unit 803 after completing the handover operation of the terminal based on the resource prepared for handover, determining that the second terminal information meets a predetermined condition for releasing the resource prepared for handover, and sending a resource release message to the first network-side device through the communication unit 803, wherein the resource release message is used for instructing the first network-side device to release a resource prepared for handover to the second network.

The processing unit 802 may be further used for obtaining second terminal information of the terminal through the communication unit 803, and releasing a resource prepared for handover to a second network when determining that the second terminal information meets a predetermined condition for releasing the resource prepared for handover, wherein the second network-side device is applied to the second network.

The processing unit 802 may be further used for obtaining second terminal information of the terminal through the communication unit 803, and sending a resource release message to the first network-side device when determining that the second terminal information meets a predetermined condition for releasing a resource prepared for handover, wherein the resource release message is used for instructing the first network-side device to release a resource prepared for handover to the second network.

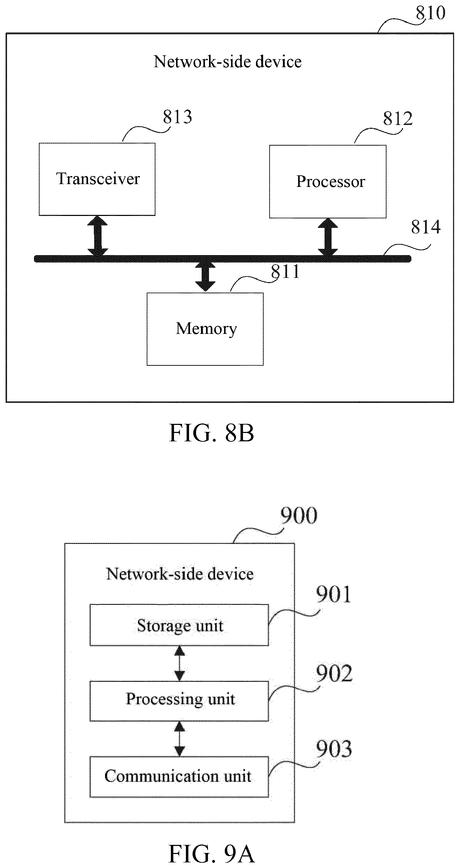

When the processing unit 802 is a processor, the communication unit 803 is a communication interface, and the storage unit 801 is a memory, the network-side device related to the example of the present disclosure may the network-side device shown in FIG. 8B.

Referring to FIG. 8B, the network-side device 810 includes a processor 812, a transceiver 813, and a memory 811. Optionally, the network-side device 810 may further include a bus 814. The transceiver 813, the processor 812, and the memory 811 may be connected to each other via a bus 814. The bus 814 may be a Peripheral Component Interconnect (PCI) bus or an Extended Industry Standard Architecture (EISA) bus or the like. The bus 814 may be categorized as an address bus, a data bus, a control bus, etc. For convenience of representation, only one thick line is used in FIG. 8B to represent the bus, but it does not represent only one bus or one type of bus.

The network-side device shown in FIG. 8A or FIG. 8B may be understood as an apparatus for the second network-side device, and the example of the present disclosure is not limited to this.

In the case of using integrated units, FIG. 9A shows a possible structural diagram of the network-side device involved in the example, which is the second network-side device in the mobile communication system shown in FIG. 1. A network-side device 900 includes a processing unit 902 and a communication unit 903. The processing unit 902 is used for controlling and managing acts of the network-side device. For example, the processing unit 902 is used for supporting the network-side device to execute acts 501-502 in FIG. 5 and/or other processes for the techniques described in this document. The communication unit 903 is used for supporting communication between the network-side device and other devices, such as communication between the terminal and the network-side device as illustrated in FIG. 1. The network-side device may further include a storage unit 901 used for storing program codes and data of the network-side device.

The processing unit 902 may be a processor or a controller such as a Central Processing Unit (CPU), a general purpose processor, a Digital Signal Processor (DSP), an Application-Specific Integrated Circuit (ASIC), a Field Programmable Gate Array (FPGA), or other programmable logic device, transistor logic device, hardware component, or any combination thereof. The processing unit may implement or execute various illustrative logical blocks, modules, and circuits described in connection with the disclosure of the present disclosure. A processor may also be a combination for implementing computing functions, e.g., a combination including one or more microprocessors, a combination of a DSP and a microprocessor. The communication unit 903 may be a transceiver or a transceiving circuit. The storage unit 901 may be a memory.

The processing unit 902 is used for receiving a second handover request sent by a first network-side device through the communication unit 903, wherein the second handover request includes third terminal information of the terminal, and the third network-side device is applied to the third network; and sending a handover preparation rejection message to the first network-side device when determining that the third terminal information does not meet a predetermined condition for initiating a handover operation, wherein the handover preparation rejection message is used for instructing the first network-side device to release a resource prepared for handover to the third network.

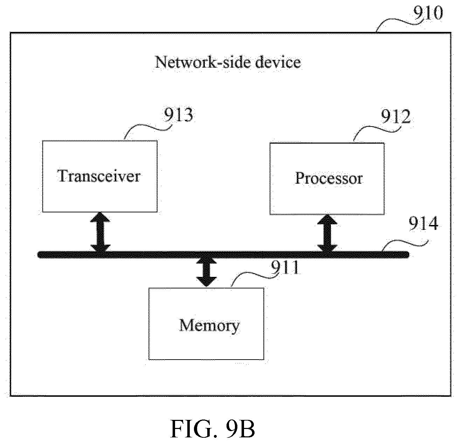

When the processing unit 902 is a processor, the communication unit 903 is a communication interface, and the storage unit 901 is a memory, the network-side device related to the example of the present disclosure may be the network-side device shown in FIG. 9B.

Referring to FIG. 9B, the network-side device 910 includes a processor 912, a transceiver 913, and a memory 911. Optionally, the network-side device 910 may further include a bus 914. The transceiver 913, the processor 912, and the memory 911 may be connected to each other through a bus 914. The bus 914 may be a Peripheral Component Interconnect (PCI) bus or an Extended Industry Standard Architecture (EISA) bus or the like. The bus 914 may be categorized as an address bus, a data bus, a control bus, etc. For convenience of representation, only one thick line is used in FIG. 9B to represent the bus, but it does not represent only one bus or one type of bus.

The network-side device shown in FIG. 9A or FIG. 9B may also be understood as an apparatus for the third network-side device, and the example of the present disclosure is not limited to this.

The example of the present disclosure further provides a mobile communication system, which includes the network-side device as shown in FIG. 7A or FIG. 7B, the network-side device as shown in FIG. 8A or FIG. 8B, the network-side device and the terminal as shown in FIG. 9A or FIG. 9B.

The acts of the method or algorithm described in examples of the present disclosure may be implemented in hardware, or implemented in a manner of executing software instructions by a processor. The software instructions may be composed of corresponding software modules. The software modules may be stored in a Random Access Memory (RAM), a flash memory, a Read Only Memory (ROM), an Erasable Programmable Read Only Memory (EPROM), an Electrically Erasable Programmable Read Only Memory (EEPROM), a register, a hard disk, a removable hard disk, a Compact Disc Read-Only Memory (CD-ROM), or a storage medium in any other form well-known in the art. An exemplary storage medium is coupled to the processor such that the processor can read information from a storage medium, and write information to the storage medium. Of course, the storage medium may be a component of the processor. The processor and the storage medium may be located in an ASIC. In addition, the ASIC may be located in an access network device, a target network device, or a core network device. Of course, the processor and the storage medium may exist, as discrete components, in an access network device, a target network device, or a core network device.

Those skilled in the art should realize that, in one or more examples described above, the functions described in examples of the present disclosure may be implemented, in whole or in part, via software, hardware, firmware or any combination thereof. When implemented by software, the examples may be implemented in whole or in part in a form of a computer program product. The computer program product includes one or more computer instructions. When the computer program instructions are loaded and executed on a computer, the flows or functions described in accordance with examples of the present disclosure are generated in whole or in part. The computer can be a general purpose computer, a special purpose computer, a computer network, or other programmable apparatus. The computer instructions may be stored in a computer readable storage medium or transferred from one computer readable storage medium to another computer readable storage medium. For example, the computer instructions can be transferred from a website site, computer, server or data center to another website site, computer, server, or data center by wire (e.g., coaxial cable, fiber optic, digital subscriber line (DSL)), or wireless (e.g., infrared, wireless, microwave, etc.). The computer readable storage medium may be any available media that may be accessed by a computer, or a data storage device such as a server, or a data center that includes one or more available media integrated. The available medium may be a magnetic medium (e.g., a floppy disk, a hard disk, a magnetic tape), an optical medium (e.g., a Digital Video Disc, DVD), or a semiconductor medium (such as a solid state disk (SSD)) or the like.

## Claims

1. A handover control method, comprising:
sending (201), by a first network-side device, a first handover request to a second network-side device, wherein the first network-side device is applied to a first network, and the second network-side device is applied to a second network, and a terminal is attached to the first network, and the first handover request contains first terminal information of the terminal, and the first terminal information is used by the second network-side device to configure a resource prepared for handover to the second network for the terminal when determining that the first terminal information meets a predetermined condition for initiating a handover operation;
after the first network-side device sends the first handover request to the second network-side device, the method further comprises:
receiving, by the first network-side device, a handover preparation confirmation message sent by the second network-side device, and sending a measurement configuration for handover to the second network to the terminal, **characterized in that**
the measurement configuration for handover is used by the terminal to measure a network channel condition of the second network to obtain a first measurement result, and to send a handover confirmation message to the second network-side device when detecting that the first measurement result meets a first measurement event, wherein the handover confirmation message is used for instructing the second network-side device to complete a handover operation of the terminal based on the resource prepared for handover;
wherein after the first network-side device receives the handover preparation confirmation message sent by the second network-side device, the method further comprises:
receiving, by the first network-side device, a resource release message sent by the second network-side device for releasing a resource prepared for handover to the second network, wherein the resource release message is sent by the second network-side device when the second network-side device obtains second terminal information of the terminal and determines that the second terminal information meets a predetermined condition for releasing the resource prepared for handover.

2. The method according to claim 1, wherein before the first network-side device sends the first handover request to the second network-side device, the method further comprises:
receiving, by the first network-side device, a second measurement result sent by the terminal, wherein the second measurement result is obtained by the terminal by measuring at least one network according to a predetermined measurement configuration, and the second measurement result meets a second measurement event;
determining, by the first network-side device, at least one candidate network in the at least one network according to the second measurement result, wherein the at least one candidate network comprises the second network.

3. The method according to claim 1 or 2, wherein the method further comprises:
sending, by the first network-side device, a second handover request to a third network-side device, wherein the second handover request comprises third terminal information of the terminal, and the third network-side device is applied to a third network, and the third terminal information is used by the third network-side device to send a handover preparation rejection message to the first network-side device when determining that the third terminal information does not meet the predetermined condition for initiating the handover operation;
receiving, by the first network-side device, the handover preparation rejection message and releasing a resource prepared for handover to the third network.

## Patentansprüche

1. Handover-Steuerverfahren, das Folgendes umfasst:
Senden (201), durch eine erste netzwerkseitige Vorrichtung, einer ersten Handover-Anforderung an eine zweite netzwerkseitige Vorrichtung, wobei die erste netzwerkseitige Vorrichtung auf ein erstes Netzwerk angewandt wird und die zweite netzwerkseitige Vorrichtung auf ein zweites Netzwerk angewandt wird und ein Endgerät mit dem ersten Netzwerk verbunden ist und die erste Handover-Anforderung erste Endgeräteinformationen des Endgeräts enthält und die ersten Endgeräteinformationen durch die zweite netzwerkseitige Vorrichtung zum Konfigurieren einer zum Handover an das zweite Netzwerk vorbereiteten Ressource für das Endgerät verwendet werden, wenn bestimmt wird, dass die ersten Endgeräteinformationen eine vorbestimmte Bedingung zum Initiieren einer Handover-Operation erfüllen;
wobei das Verfahren, nachdem die erste netzwerkseitige Vorrichtung die erste Handover-Anforderung an die zweite netzwerkseitige Vorrichtung sendet, ferner Folgendes umfasst:
Empfangen, durch die erste netzwerkseitige Vorrichtung, einer durch die zweite netzwerkseitige Vorrichtung gesendeten Handover-Vorbereitungsbestätigungsnachricht und Senden einer Messkonfiguration für ein Handover an das zweite Netzwerk an das Endgerät, **dadurch gekennzeichnet, dass** die Messkonfiguration für ein Handover durch das Endgerät verwendet wird zum Messen einer Netzwerkkanalbedingung des zweiten Netzwerks, um ein erstes Messergebnis zu erhalten, und zum Senden einer Handover-Bestätigungsnachricht an die zweite netzwerkseitige Vorrichtung, wenn detektiert wird, dass das erste Messergebnis ein erstes Messereignis erfüllt, wobei die Handover-Bestätigungsnachricht verwendet wird zum Anweisen der zweiten netzwerkseitigen Vorrichtung zum Abschließen einer Handover-Operation des Endgeräts basierend auf der zum Handover vorbereiteten Ressource;
wobei das Verfahren, nachdem die erste netzwerkseitige Vorrichtung die durch die zweite netzwerkseitige Vorrichtung gesendete Handover-Vorbereitungsbestätigungsnachricht empfängt, ferner Folgendes umfasst:
Empfangen, durch die erste netzwerkseitige Vorrichtung, einer durch die zweite netzwerkseitige Vorrichtung gesendeten Ressourcenfreigabenachricht zum Freigeben einer zum Handover an das zweite Netzwerk vorbereiteten Ressource, wobei die Ressourcenfreigabenachricht durch die zweite netzwerkseitige Vorrichtung gesendet wird, wenn die zweite netzwerkseitige Vorrichtung zweite Endgeräteinformationen des Endgeräts erhält und bestimmt, dass die zweiten Endgeräteinformationen eine vorbestimmte Bedingung zum Freigeben der zum Handover vorbereiteten Ressource erfüllen.

2. Verfahren nach Anspruch 1, wobei das Verfahren, bevor die erste netzwerkseitige Vorrichtung die erste Handover-Anforderung an die zweite netzwerkseitige Vorrichtung sendet, ferner Folgendes umfasst:
Empfangen, durch die erste netzwerkseitige Vorrichtung, eines durch das Endgerät gesendeten zweiten Messergebnisses, wobei das zweite Messergebnis durch das Endgerät durch Messen mindestens eines Netzwerks gemäß einer vorbestimmten Messkonfiguration erhalten wird und das zweite Messergebnis ein zweites Messereignis erfüllt;
Bestimmen, durch die erste netzwerkseitige Vorrichtung, mindestens eines Kandidatennetzwerks in dem mindestens einen Netzwerk gemäß dem zweiten Messergebnis, wobei das mindestens eine Kandidatennetzwerk das zweite Netzwerk umfasst.

3. Verfahren nach Anspruch 1 oder 2, wobei das Verfahren ferner Folgendes umfasst:
Senden, durch die erste netzwerkseitige Vorrichtung, einer zweiten Handover-Anforderung an eine dritte netzwerkseitige Vorrichtung, wobei die zweite Handover-Anforderung dritte Endgeräteinformationen des Endgeräts umfasst und die dritte netzwerkseitige Vorrichtung auf ein drittes Netzwerk angewandt wird und die dritten Endgeräteinformationen durch die dritte netzwerkseitige Vorrichtung zum Senden einer Handover-Vorbereitungsablehnungsnachricht an die erste netzwerkseitige Vorrichtung verwendet werden, wenn bestimmt wird, dass die dritten Endgeräteinformationen die vorbestimmte Bedingung zum Initiieren der Handover-Operation nicht erfüllen;
Empfangen, durch die erste netzwerkseitige Vorrichtung, der Handover-Vorbereitungsablehnungsnachricht und Freigeben einer zum Handover an das dritte Netzwerk vorbereiteten Ressource.

## Revendications

1. Procédé de commande de transfert, comprenant de :
envoyer (201), par un premier dispositif côté réseau, une première demande de transfert à un deuxième dispositif côté réseau, dans lequel le premier dispositif côté réseau est appliqué à un premier réseau, et le deuxième dispositif côté réseau est appliqué à un deuxième réseau, et un terminal est rattaché au premier réseau, et la première demande de transfert contient de premières informations de terminal du terminal, et les premières informations de terminal sont utilisées par le deuxième dispositif côté réseau pour configurer une ressource préparée pour le transfert vers le deuxième réseau pour le terminal lorsqu'il est déterminé que les premières informations de terminal satisfont à une condition prédéterminée pour initier une opération de transfert;
après que le premier dispositif côté réseau a envoyé la première demande de transfert au deuxième dispositif côté réseau, le procédé comprend en outre de :
recevoir, par le premier dispositif côté réseau, un message de confirmation de préparation de transfert envoyé par le deuxième dispositif côté réseau, et envoyer au terminal une configuration de mesure pour le transfert vers le deuxième réseau, **caractérisé en ce que**
la configuration de mesure pour le transfert est utilisée par le terminal pour mesurer une condition de canal de réseau du deuxième réseau pour obtenir un premier résultat de mesure, et pour envoyer un message de confirmation de transfert au deuxième dispositif côté réseau lorsqu'il est détecté que le premier résultat de mesure satisfait à un premier événement de mesure, dans lequel le message de confirmation de transfert est utilisé pour ordonner au deuxième dispositif côté réseau de terminer une opération de transfert du terminal sur la base de la ressource préparée pour le transfert;
dans lequel, après que le premier dispositif côté réseau a reçu le message de confirmation de préparation de transfert envoyé par le deuxième dispositif côté réseau, le procédé comprend en outre de :
recevoir, par le premier dispositif côté réseau, un message de libération de ressource envoyé par le deuxième dispositif côté réseau pour libérer une ressource préparée pour le transfert vers le deuxième réseau, dans lequel le message de libération de ressource est envoyé par le deuxième dispositif côté réseau lorsque le deuxième dispositif côté réseau obtient de deuxièmes informations de terminal du terminal et détermine que les deuxièmes informations de terminal satisfont à une condition prédéterminée pour libérer la ressource préparée pour le transfert.

2. Procédé selon la revendication 1, dans lequel avant que le premier dispositif côté réseau envoie la première demande de transfert au deuxième dispositif côté réseau, le procédé comprend en outre de :
recevoir, par le premier dispositif côté réseau, un deuxième résultat de mesure envoyé par le terminal, dans lequel le deuxième résultat de mesure est obtenu par le terminal en mesurant au moins un réseau selon une configuration de mesure prédéterminée, et le deuxième résultat de mesure satisfait à un deuxième événement de mesure;
déterminer, par le premier dispositif côté réseau, au moins un réseau candidat dans l'au moins un réseau en fonction du deuxième résultat de mesure, dans lequel l'au moins un réseau candidat comprend le deuxième réseau.

3. Procédé selon la revendication 1 ou 2, dans lequel le procédé comprend en outre de :
envoyer, par le premier dispositif côté réseau, une deuxième demande de transfert à un troisième dispositif côté réseau, dans lequel la deuxième demande de transfert comprend de troisièmes informations de terminal du terminal, et le troisième dispositif côté réseau est appliqué à un troisième réseau, et les troisièmes informations de terminal sont utilisées par le troisième dispositif côté réseau pour envoyer un message de rejet de préparation de transfert au premier dispositif côté réseau lorsqu'il est déterminé que les troisièmes informations de terminal ne satisfont pas à la condition prédéterminée pour initier l'opération de transfert;
recevoir, par le premier dispositif côté réseau, le message de rejet de préparation de transfert et libérer une ressource préparée pour le transfert vers le troisième réseau.
